# EUROPEAN PATENT SPECIFICATION

(11) **EP 4 478 764 B1**
(45) Date of publication and mention of the grant of the patent: **28.10.2026**
(21) Application number: 22925867.8
(22) Date of filing: 09.02.2022
(51) Int. Cl.: H04W 12/086, H04W 8/12, H04W 92/24, H04W 12/08

(54) **NETWORK NODE AND COMMUNICATION METHOD**
NETZWERKKNOTEN UND KOMMUNIKATIONSVERFAHREN
NOEUD DE RÉSEAU ET PROCÉDÉ DE COMMUNICATION

(43) Date of publication of application: 18.12.2024
(73) Proprietor: NTT DOCOMO, INC., Tokyo 100-6150 (JP)
(72) Inventor: ISHIKAWA, Hiroshi, Tokyo 100-6150 (JP); MINOKUCHI, Atsushi, Tokyo 100-6150 (JP); SUZUKI, Yuji, Tokyo 100-6150 (JP)
(74) Representative: Hoffmann Eitle
(86) International application number: PCT/JP2022/005222
(87) International publication number: WO 2023/152846

(56) References cited:
- WO-A1-2020/204092
- JP-A- 2020 170 896
- "3rd Generation Partnership Project; Technical Specification Group Core Network and Terminals; Service-based support for SMS in 5GC; (Release 17)", no. V17.0.0, 16 December 2021 (2021-12-16), pages 1 - 78, XP052083149, Retrieved from the Internet <URL:https://ftp.3gpp.org/Specs/archive/29_series/29.829/29829-h00.zip 29829-h00.docx> [retrieved on 20211216]
- NTT DOCOMO: "Usage indication over N32-c", vol. CT WG4, no. E-Meeting; 20220217 - 20220225, 9 February 2022 (2022-02-09), XP052105263, Retrieved from the Internet <URL:https://ftp.3gpp.org/tsg_ct/WG4_protocollars_ex-CN4/TSGCT4_108e_meeting/Docs/C4-221372.zip C4-221372 N32-c establish purpose indication 29573-h30.docx> [retrieved on 20220209]
- "3rd Generation Partnership Project; Technical Specification Group Core Network and Terminals; Service-based support for SMS in 5GC; (Release 17)", 3GPP STANDARD; TECHNICAL REPORT; 3GPP TR 29.829, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V17.0.0, 16 December 2021 (2021-12-16), Mobile Competence Centre ; 650, route des Lucioles ; F-06921 Sophia-Antipolis Cedex ; France, pages 1 - 78, XP052083149
- NOKIA, NOKIA SHANGHAI BELL: "SEPP capability negotation", 3GPP DRAFT; C4-214333, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG4, no. E-Meeting; 20210817 - 20210827, 9 August 2021 (2021-08-09), Mobile Competence Centre ; 650, route des Lucioles ; F-06921 Sophia-Antipolis Cedex ; France , XP052041262
- NTT DOCOMO: "Usage indication over N32-c", 3GPP DRAFT; C4-221372, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG4, no. E-Meeting; 20220217 - 20220225, 9 February 2022 (2022-02-09), Mobile Competence Centre ; 650, route des Lucioles ; F-06921 Sophia-Antipolis Cedex ; France, XP052105263

## Description

### Technical Field

The present disclosure relates to a network node and a communication method.

### Background Art

In 3rd Generation Partnership Project (3GPP), studies have been carried out on a radio communication system called 5G or New Radio (NR) (hereinafter, the radio communication system is referred to as "5G" or "NR") to achieve increased system capacity, higher data transmission speed, lower latency in a radio section, and the like. In 5G, various radio techniques have been studied in order to meet the requirement to achieve a latency of 1 ms or less in a radio section while achieving a throughput of 10 Gbps or higher.

In NR, studies have been carried out on network architecture including 5G Core Network (5GC) corresponding to Evolved Packet Core (EPC), which is a core network in the network architecture of Long Term Evolution (LTE), and Next Generation - Radio Access Network (NG-RAN) corresponding to Evolved Universal Terrestrial Radio Access Network (E-UTRAN), which is a radio access network (RAN) in the network architecture of LTE.

In the network architecture of 5G, N32 is specified as a reference point on a connection point of a home public land mobile network (HPLMN) of user equipment (UE) and a visited public land mobile network (VPLMN) of the UE (see Non Patent Literature (hereinafter, referred to as NPL) 1).

The N32 interface is logically considered as the following two different interfaces (see NPL 2).
N32-c: a control plane interface between security edge protection proxies (SEPPs) for performing initial handshake and negotiating parameters to be applied for the actual N32 message forwarding
N32-f: a forwarding interface between the SEPPs which is used for forwarding a signal between a service consumer and a service producer after applying application level security protection

### Citation List

### Non Patent Literature

NPL 1
   3GPP TS 23.501 V17.3.0 (2021-12)
NPL 2
   3GPP TS 29.573 V17.3.0 (2021-12)
NPL 3
   3GPP TS 29.500 V17.5.0 (2021-12)
"3rd Generation Partnership Project; Technical Specification Group Core Network and Terminals; Service-based support for SMS in 5GC; (Release 17)", 3GPP STANDARD, 3GPP TR 29.829, no. V17.0.0 16 December 2021 (2021-12-16), discloses that N32 can be established irrespective of whether there is roaming relationship among two PLMNs. To allow SEPPs to determine whether N32 connectivity can be established for the necessary purposes, exchange of a new attribute that contains the purpose of establishing N32 connectivity between SEPPs when initiating N32 handshake shall be introduced so that pSEPP can determine whether to allow or reject the requested N32 connectivity. A new attribute shall be sent from initiating SEPP to responding SEPP within "SecNegoiateReqData" that contains the usage purpose of the intended N32 connectivity establishment. If the purpose of the intended N32 connectivity establishment requested from Initiating SEPP matches with the policy allowed by the responding SEPP, the responding SEPP shall accept the request including the accepted purpose of the N32 connectivity within the new attribute within "SecNegotiateRspData". If the purpose of the intended N32 connectivity establishment cannot be accepted by the responding SEPP, the responding SEPP shall reject the request including the reason in the ProblemDetails.
WO 2020/204092 A1 (SHARP KK [JP]) 8 October 2020 (2020-10-08) deals with a method for realizing functions for NPN in 5GS.

### Summary of Invention

The invention is defined by the independent claims. Preferred embodiments are defined by the dependent claims.

The current specification limits the usage purpose of N32 to roaming, and there is scope for further study on a case of extending the usage purpose of N32 beyond roaming.

An aspect of the present disclosure provides a network node and a communication method each capable of appropriately determining connection availability of N32 even in a case where the usage purpose of N32 is extended so that N32 can be used for a purpose other than roaming.

The present invention is defined by the independent claims. Preferred embodiments are defined by the dependent claims. Further aspects and examples are provided for facilitating the understanding of the invention. A network node according to an example is a network node that connects to another network node via a reference point, the network node including: a reception section that receives a first control signal including information indicating a usage purpose of the reference point requested by the another network node; a control section that determines, for each of a plurality of the usage purposes, whether the requested usage purpose is allowed; and a transmission section that transmits, to the another network node, a second control signal including information portions respectively indicating an allowed usage purpose and a rejected usage purpose among a plurality of the requested usage purposes, wherein, the first control signal includes a plurality of information portions on the usage purpose of the reference point, and the control section determines whether all of the plurality of information portions on the usage purpose of the reference point are allowed in an agreement between operators.

A communication method according to an example is a communication method between a first network node and a second network node via a reference point, the communication method including: transmitting, by the first network node to the second network node, a first control signal including information indicating a usage purpose of the reference point to request; determining, by the second network node, for each of a plurality of the usage purposes, whether the requested usage purpose is allowed; and transmitting, by the second network node to the first network node, a second control signal including information portions respectively indicating an allowed usage purpose and a rejected usage purpose among a plurality of the requested usage purposes, wherein, the first
control signal includes a plurality of information portions on the usage purpose of the reference point, and the second network node determines whether all of the plurality of information portions on the usage purpose of the reference point are allowed in an agreement between operators.

### Brief Description of Drawings

FIG. 1 illustrates an exemplary communication system according to an embodiment of the present disclosure;
FIG. 2 illustrates another exemplary communication system according to an embodiment of the present disclosure;
FIG. 3 is a sequence diagram describing a procedure of negotiation between SEPPs in the communication system according to an embodiment of the present disclosure;
FIG. 4 illustrates a definition of SecNegotiationReqData according to an embodiment of the present disclosure;
FIG. 5 illustrates a definition of SecNegotiationRspData according to an embodiment of the present disclosure;
FIG. 6 illustrates a definition of IntendedN32Purpose according to an embodiment of the present disclosure;
FIG. 7 illustrates exemplary usage purposes of N32 according to an embodiment of the present disclosure;
FIG. 8 is a sequence diagram describing a procedure of signal forwarding between an NF service consumer and an NF service producer according to an embodiment of the present disclosure;
FIG. 9 illustrates an exemplary function configuration of the SEPP according to an embodiment of the present disclosure;
FIG. 10 illustrates an exemplary hardware configuration of a terminal, a base station, a data hub access support apparatus, or other network nodes according to an embodiment of the present disclosure; and
FIG. 11 illustrates an exemplary configuration of vehicle 2001 according to an embodiment of the present invention.

### Description of Embodiments

### (Overview of Present Disclosure)

In Release 17, service based architecture (SBA) has been standardized in order to achieve the development of a wide variety of services while adding functions quickly and mutually between a short message service centre (SMSC) of an originator and an SMSC of a terminator in the 5G core network. This has produced a new usage (usage purpose) of connection between operators other than roaming, which is "Interconnect".

The current specification limits the usage purpose of N32 to roaming, so that an SEPP can determine the connection availability of N32 according to the presence or absence of a roaming relationship.

Meanwhile, N32 can be theoretically used for a purpose other than roaming, such as "Interconnect".

In the current situation, however, there is no parameter to confirm the usage purpose, and it is thus difficult for an SEPP to determine the connection availability of N32 when N32 is used for a purpose other than roaming.

In view of the above, the present disclosure facilitates providing a network node and a communication method each capable of appropriately determining the connection availability of N32 even in a case where the usage purpose of N32 is extended so that N32 can be used for a purpose other than roaming.

Hereinafter, an embodiment of the present disclosure will be described with reference to the accompanying drawings. Note that the embodiment to be described below is merely an example, and an embodiment to which the present disclosure is applied is not limited to the embodiment below.

The existing technology may be appropriately used for an operation of a radio communication system according to an embodiment of the present disclosure. The existing technology includes but not limited to existing LTE or existing 5G, for example.

The names of nodes, signals, etc. in the following description are from the current 5G specification (or LTE specification), but different names may be used for nodes, signals, etc. having the same functions as those in the following description.

For example, in an embodiment of the present disclosure, the terms used in the existing LTE are sometimes used, such as a synchronization signal (SS), a primary SS (PSS), a secondary SS (SSS), a physical broadcast channel (PBCH), a physical random access channel (PRACH), a physical downlink control channel (PDCCH), a physical downlink shared channel (PDSCH), a physical uplink control channel (PUCCH), and a physical uplink shared channel (PUSCH). The terms in NR corresponding to the above terms are NR-SS, NR-PSS, NR-SSS, NR-PBCH, NR-PRACH, NR-PDCCH, NR-PDSCH, NR-PUCCH, and NR-PUSCH. Note that "NR-" is not necessary even for a signal used in NR.

### (Exemplary System Configuration)

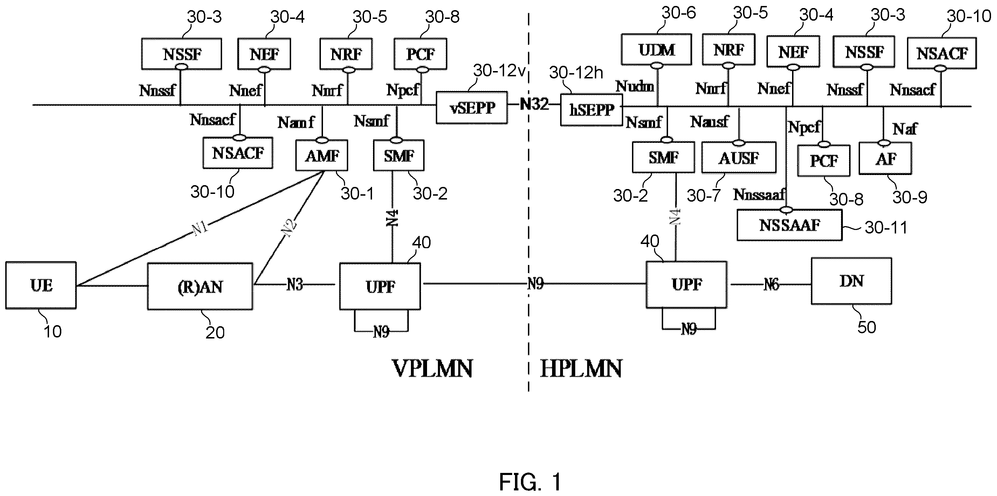

Next, communication system 1 according to an embodiment of the present disclosure will be described with reference to FIG. 1. Note that FIG. 1 illustrates a configuration of a communication system in a roaming scenario.

Communication system 1 includes, for example, user equipment (UE; also referred to as a (user) terminal) 10, which is a communication terminal used by a user, and a plurality of network nodes 20, 30-1 to 30-12 (may be referred to as network functions (NFs)), and 40. Although a single network node supports a single function in the following description, a single network node may implement a plurality of functions and a plurality of network nodes may implement a single function. In addition, the "connection" described below may be logical connection or physical connection.

Communication system 1 is a system included in a 5G network system, and provides a network service to UE 10 by data communication. The network service is a service using a network resource such as a communication service (e.g., leased line service), and an application service (e.g., video streaming and a service using a sensor device such as an embedded device).

In FIG. 1, it is assumed that UE 10 is in a roaming environment. UE 10 being in a roaming environment means that UE 10 is communicating by accessing not an HPLMN, which is a network of an operator contracted by a user of UE 10 (home network), but a VPLMN, which is a network where UE 10 is present (visited network). In the present embodiment, the VPLMN is a first network and the HPLMN is a second network.

The VPLMN of communication system 1 includes UE 10, (radio) access network ((R)AN) 20, access and mobility management function (AMF) 30-1, session management function (SMF) 30-2, network slice selection function (NSSF) 30-3, network exposure function (NEF) 30-4, network repository function (NRF) 30-5, policy control function (PCF) 30-8, network slice admission control function (NSACF) 30-10, security edge protection proxy (SEPP) 30-12, and user plane function (UPF) 40.

The HPLMN of communication system 1 includes SMF 30-2, NSSF 30-3, NEF 30-4, NRF 30-5, unified data management (UDM) 30-6, authentication server function (AUSF) 30-7, PCF 30-8, application function (AF) 30-9, NSACF 30-10, network slice specific authentication and authorization function (NSSAAF) 30-11, SEPP 30-12, and UPF 40.

(R)AN 20 is a network node having a radio access function, and may be, for example, next generation node B (gNB or may be referred to as base station) 20.

AMF 30-1 is a network node having functions such as RAN interface termination, non-access stratum (NAS) termination, registration management, connection management, reachability management, and mobility management.

SMF 30-2 is a network node having functions such as session management, UE Internet protocol (IP) address allocation and management, a dynamic host configuration protocol (DHCP) function, an address resolution protocol (ARP) proxy, and a roaming function.

NSSF 30-3 is a network node having functions such as network slice selection for a UE to connect, determination of allowed network slice selection assistance information (NSSAI), determination of configured NSSAI, and determination of an AMF set for a UE to connect.

NEF 30-4 is a network node having a function of indicating a capability and an event to another NF.

NRF 30-5 is a network node having a function of finding an NF instance to provide a service.

UDM 30-6 is a network node managing subscriber data and authentication data. UDM 30-6 is connected to a user data repository (UDR) that holds the data.

AUSF 30-7 is a network node authenticating a subscriber/UE 10 against the subscriber data held in the UDR.

PCF 30-8 is a network node having a function of controlling a network policy.

AF 30-9 is a network node having a function of controlling an application server.

NSACF 30-10 is a network node having a function of controlling network slice admission.

NSSAAF 30-11 is a network node having a function of controlling network slice authentication/authorization.

SEPP 30-12 is a network node having a proxy that controls message filtering and policy restriction in the interaction of control planes between operators. Note that SEPP 30-12 on the VPLMN side is referred to as vSEPP 30-12v, and SEPP 30-12 on the HPLMN side is referred to as hSEPP 30-12h. vSEPP 30-12v and hSEPP 30-12h provide a function regarding security and integrity of a message (HTTP request and HTTP response, for example) transmitted and received between the VPLMN and HPLMN.

UPF 40 is a network node having functions such as an external protocol data unit (PDU) session point, packet routing and forwarding, and quality of service (QoS) handling for a user place.

Note that N1, N2, N3, N4, and N9 are reference points among the network nodes. In addition, N32 between vSEPP 30-12v and hSEPP 30-12h is a reference point on a connection point of the VPLMN and HPLMN.

(R)AN 20 is connected to UE 10, AMF 30-1, and UPF 40.

In the VPLMN, AMF 30-1, SMF 30-2, NSSF 30-3, NEF 30-4, NRF 30-5, PCF 30-8, and NSACF 30-10 are interconnected via Namf, Nsmf, Nnssf, Nnef, Nnrf, Npcf, and Nsacf respectively, which are interfaces based on respective services.

In the HPLMN, SMF 30-2, NSSF 30-3, NEF 30-4, NRF 30-5, UDM 30-6, AUSF 30-7, PCF 30-8, AF 30-9, NSACF 30-10, and NSSAAF 30-11 are interconnected via Nsmf, Nnssf, Nnef, Nnrf, Nudm, Nausf, Npcf, Naf, Nsacf, and Nnssaaf respectively, which are interfaces based on respective services.

vSEPP 30-12v is connected to AMF 30-1, SMF 30-2, NSSF 30-3, NEF 30-4, NRF 30-5, PCF 30-8, and NSACF 30-10 of the VPLMN, and is also connected to hSEPP 30-12h via N32.

hSEPP 30-12h is connected to SMF 30-2, NSSF 30-3, NEF 30-4, NRF 30-5, UDM 30-6, AUSF 30-7, PCF 30-8, AF 30-9, NSACF 30-10, and NSSAAF 30-11 of the HPLMN, and is also connected to vSEPP 30-12v via N32.

UPF 40 on the VPLMN side is interconnected with (R)AN 20, SMF 30-2, and UPF 40 on the HPLMN side. UPF 40 on the HPLMN side is interconnected with SMF 30-2 and data network (DN) 50.

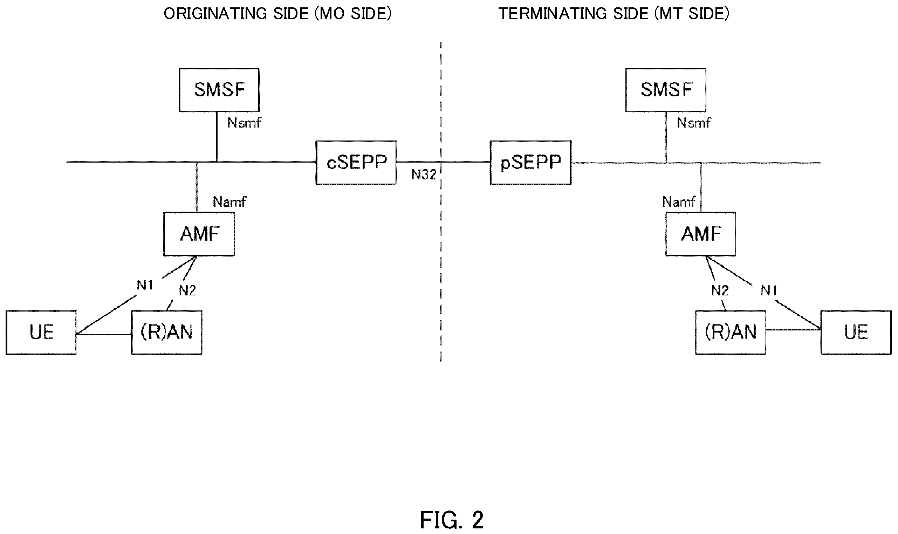

Note that a communication system in an "Interconnect" scenario has a configuration in FIG. 2. In the case of "Interconnect", the SEPP (cSEPP) on the consumer side (originating side) corresponds to vSEPP 30-12v in the roaming scenario (FIG. 1), and the SEPP (pSEPP) on the producer side (terminating side) corresponds to rSEPP 30-12r in the roaming scenario (FIG. 1).

### (Initial Handshake: N32-c)

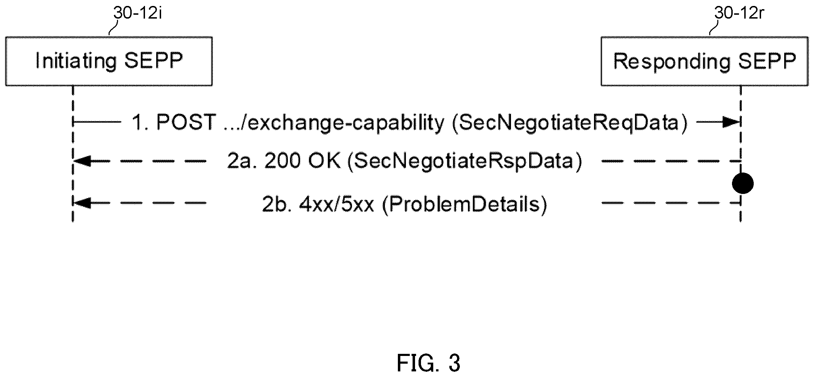

Next, a description will be given of determination processing whether the initial connection establishment (handshake) is possible taking into consideration the use (usage purpose) of connection between operators according to the present embodiment with reference to FIGS. 3 to 7.

As illustrated in FIG. 3, negotiation between SEPPs is performed according to the following procedure.

(Step 1) Initiating SEPP 30-12i transmits an HTTP POST request including SecNegotiateReqData to responding SEPP 30-12r. Responding SEPP 30-12r determines whether the request is successful or failed, i.e., whether the handshake of N32 is possible, by the determination processing to be described later. Note that the determination processing performed by responding SEPP 30-12r is indicated by "•" in FIG. 3.

(Step 2a) When the request is successful, responding SEPP 30-12r transmits a status code of "200 OK" including SecNegotiateRspData to initiating SEPP 30-12i.

(Step 2b) When the request is failed, responding SEPP 30-12r transmits a status code of "4xx/5xx" and ProblemDetails indicating a reason for the rejection to initiating SEPP 30-12i.

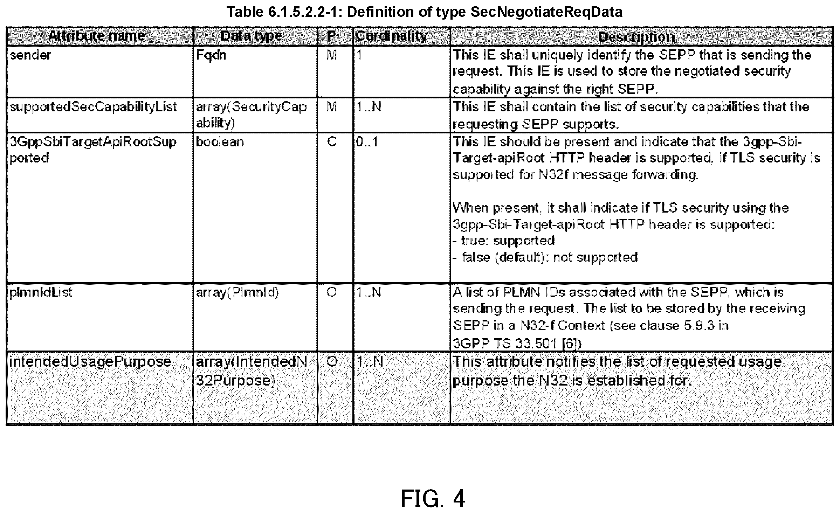

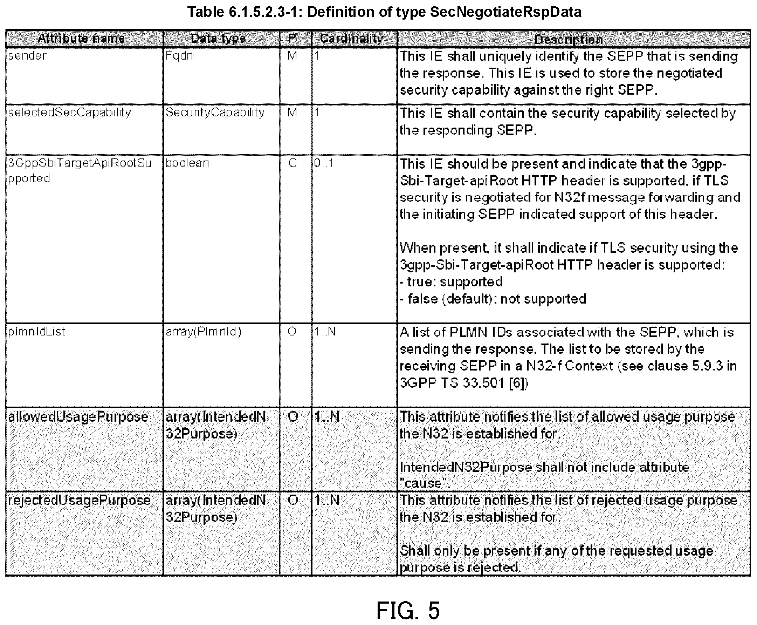

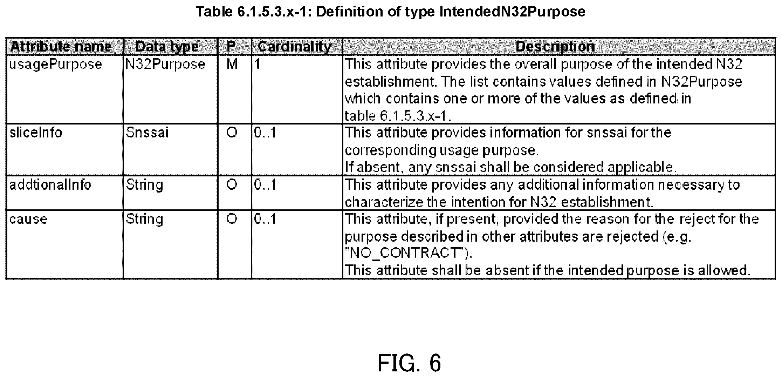

FIG. 4 illustrates a definition of the control signal SecNegotiationReqData. FIG. 5 illustrates a definition of the control signal SecNegotiationRsqData. FIG. 6 illustrates a definition of the control signal IntendedN32Purpose.

The definition of SecNegotiationReqData illustrated in FIG. 4 is the Definition of type SecNegotiationReqData described in Table 6.1.5.2.2-1 of NPL 2 with the new attribute, which is intendedUsagePurpose, added. The IntendedUsagePurpose indicates a list of usage purposes of N32 that are requested in the N32 handshake.

Likewise, the definition of SecNegotiationRspData illustrated in FIG. 5 is the Definition of type SecNegotiationRspData described in Table 6.1.5.2.3-1 of NPL 2 with the new attributes, which are allowedUsagePurpose and rejectedUsagePurpose, added. The allowedUsagePurpose indicates a list of allowed usage purposes of N32 among the requested usage purposes in the N32 handshake. The rejectedUsagePurpose indicates a list of rejected usage purposes of N32 among the requested usage purposes in the N32 handshake.

The intendedUsagePurpose in FIG. 4, and the allowedUsagePurpose and rejectedUsagePurpose in FIG. 5 include values defined in the IntendedN32Purpose illustrated in FIG. 6.

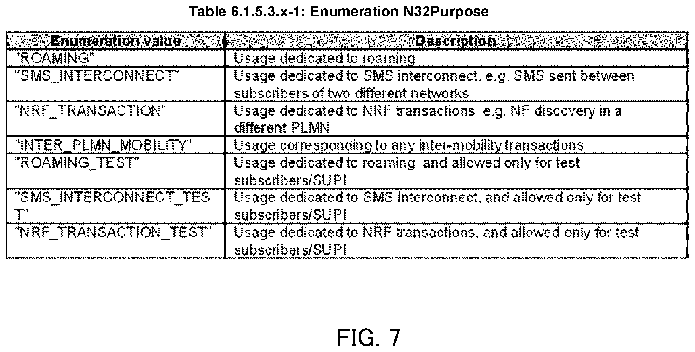

As illustrated in FIG. 6, the definition of the IntendedN32Purpose includes attributes such as usagePurpose, sliceInfo, additionalInfo, and cause. The usagePurpose provides one or more values that are defined in the N32Purpose illustrated in FIG. 7 and indicate the usage purposes of N32. The sliceInfo provides information of a network slice corresponding to the usage purpose of N32. The additionalInfo provides additional information required for the N32 handshake. The cause provides a reason for rejection when any of the requested usage purposes is rejected. The usagePurpose, sliceInfo, and additionalInfo are included in all of the intendedUsagePurpose, allowedUsagePurpose, and rejectedUsagePurpose. The cause is included only in the rejectedUsagePurpose.

Note that a value individually determined between operators may be inputted to the additional information. For example, when there are a plurality of types of communication, such as (1) communication related to VoLTE, (2) communication related to the Internet, (3) communication for an enterprise, and (4) important communication (path limited to priority subscribers), and different types of communication are established using N32 between the same operators depending on the situation, identification information specific to the communication may be inputted to the additional information.

FIG. 7 illustrates exemplary usage purposes of N32 in an ENUM table.

As illustrated in FIG. 7, the usage purposes of N32 include Roaming, SMS_interconnect, NRF_transaction, Inter PLMN mobility, Roaming test, SMS_interconnect test, and NRF_transaction test.

The roaming is a mechanism for transmitting and receiving required signals with the HPLMN from the VPLMN, such as acquisition, authentication, and position registration of subscriber information, and session establishment of communication via a home network.

The SMS_interconnect is a mechanism for transmitting and receiving a signal used for a short message service (SMS) between users of different operators.

The NRF_transaction is a mechanism for transmitting and receiving a signal to be used for a purpose other than the roaming and SMS_interconnect, such as access to an NRF (e.g., discovery of another network device (NF Discovery)), and status indication (notification) from an NRF and another NF producer.

The Inter PLMN mobility is a mechanism for transmitting and receiving a signal to be used for exchanging profiles of new and old AMFs (apparatus within the areas) when a communication apparatus moves between different PLMNs.

The Roaming test is a mechanism for transmitting and receiving an identification signal for experimentally performing confirmation of the normality whether connection is possible prior to the initiation of the roaming.

The SMS_interconnect test is a mechanism for transmitting and receiving an identification signal for experimentally performing confirmation of the normality whether connection is possible prior to the initiation of the SMS_interconnect.

The NRF_transaction test is a mechanism for transmitting and receiving an identification signal for experimentally performing confirmation of the normality whether connection is possible prior to the initiation of the NRF_transaction.

Note that the enumeration values illustrated in FIG. 7 may be index values (simple datatype configuration values).

Determination processing of responding SEPP 30-12r will be described below.

Upon reception of the HTTP POST request including the SecNegotiateReqData from initiating SEPP 30-12i in step 1 in FIG. 3, responding SEPP 30-12r recognizes the usage purposes of N32 requested from initiating SEPP 30-12i by the IntendedN32Purpose of the intendedUsagePurpose in the SecNegotiateReqData.

Then, responding SEPP 30-12r determines whether the requested usage purposes of N32 are allowed in the agreement (policy) between the operators.

For example, responding SEPP 30-12r may determine, for each requested usage purpose, whether all three pieces of information on the usage purposes of N32, which are the usagePurpose, sliceInfo, and additionalInfo, are allowed in the agreement. In this case, when any one of the three pieces of information is not allowed, responding SEPP 30-12r may reject the request of handshake for that usage purpose of N32.

When all or some of the requested usage purposes of N32 is allowed, responding SEPP 30-12r specifies the allowed usage purpose(s) in the IntendedN32Purpose of the allowedUsagePurpose in the SecNegotiationRspData, and specifies the rejected usage purpose(s) in the IntendedN32Purpose of the rejectedUsagePurpose in the SecNegotiationRspData. Responding SEPP 30-12r then transmits the status code of "200 OK" including the SecNegotiateRspData to initiating SEPP 30-12i (Step 2a in FIG. 3).

Meanwhile, when none of the requested usage purposes of N32 is allowed, responding SEPP 30-12r transmits the status code of "4xx/5xx" and ProblemDetails indicating a reason for the rejection to initiating SEPP 30-12i (Step 2b in FIG. 3).

As described above, in the present embodiment, the new attributes specifying the usage purposes of N32 are added to the SecNegotiationReqData and SecNegotiationRsqData. In the initial handshake, the usage purposes of N32 to be requested are specified by initiating SEPP 30-12i transmitting the SecNegotiationReqData to responding SEPP 30-12r. Responding SEPP 30-12r determines whether the usage purposes of N32 requested by the SecNegotiationReqData are allowed in the agreement, and specifies the allowed/rejected usage purposes of N32 by transmitting the SecNegotiationRsqData to responding SEPP30-12r.

As described above, according to the present embodiment, parameters for confirming the usage purposes of N32 are added to the control signal from initiating SEPP 30-12i. This allows responding SEPP 30-12r to appropriately determine the connection availability of N32 even when the usage purpose of N32 is extended so that N32 can be used for a purpose other than roaming.

### (Signal Forwarding: N32-f)

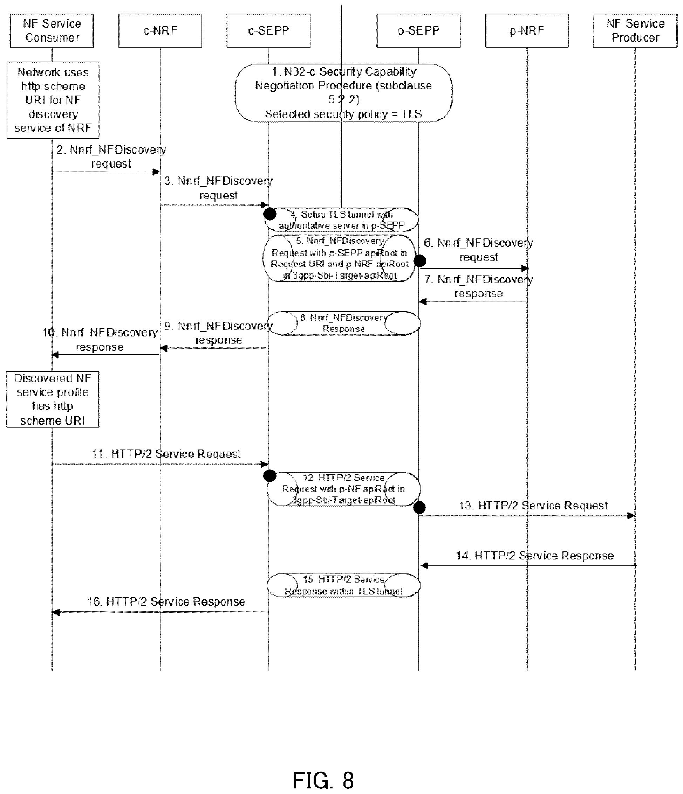

Next, with reference to FIG. 8, a description will be given of determination processing of whether signal forwarding is possible between an NF service consumer and an NF service producer after the initial handshake.

As illustrated in FIG. 8, the signal forwarding between an NF service consumer, which uses an NF service, and an NF service producer, which provides an NF service, is performed according to the following procedure.

(Step 1) An SEPP (c-SEPP) on the NF service consumer side and an SEPP (p-SEPP) on the NF service producer side negotiate a security function. Note that the SEPPs use transport layer security (TLS) as the security policy. TLS connection is configured between the c-SEPP and p-SEPP for N32-f forwarding.

(Step 2) The NF service consumer forwards an Nnrf_NF Discovery request to a c-NRF.

(Step 3) The c-NRF forwards the Nnrf_NF Discovery request to the c-SEPP.

(Step 4) The c-SEPP configures an authoritative server in the p-SEPP and a TLS tunnel.

(Step 5) The c-SEPP configures Request URI apiRoot to p-SEPP apiRoot, inserts a 3gpp-Sbi-Target-apiRoot header (custom header) configured in p-NRF apiRoot, and transmits the Nnrf_NF Discovery request to the p-SEPP.

(Step 6) The p-SEPP forwards the Nnrf_NF Discovery request to a p-NRF.

(Step 7) The p-NRF transmits an Nnrf_NF Discovery response to the p-SEPP.

(Step 8) The p-SEPP forwards the Nnrf_NF Discovery response to the c-SEPP in the TLS tunnel.

(Step 9) The c-SEPP forwards the Nnrf_NF Discovery response to the c-NRF.

(Step 10) The c-NRF forwards the Nnrf_NF Discovery response to the NF service consumer.

(Step 11) The NF service consumer uses an "http" scheme URI to initiate an HTTP message, and forwards an HTTP/2 Service request to the c-SEPP.

(Step 12) The c-SEPP forwards the HTTP/2 Service request to the p-SEPP in the TLS tunnel.

(Step 13) The p-SEPP forwards the request to the NF service producer.

(Step 14) The NF service producer forwards an HTTP/2 Service response to the p-SEPP.

(Step 15) The p-SEPP forwards the HTTP/2 Service response to the c-SEPP in the TLS tunnel.

(Step 16) The c-SEPP forwards the HTTP/2 Service response to the NF service consumer.

In the present embodiment, the NF service consumer configures the 3gpp-Sbi-Interplmn-Purpose header (custom header) to at least one of the Nnrf_NF Discovery request and HTTP/2 Service request that are signals addressed to another network, and writes, in the header, information indicating the usage purpose of N32 for inter-PLMN signaling intended by the NF service consumer.

Note that the values of N32Purpose illustrated in FIG. 7 may be used as the information indicating the usage purpose of N32 in the 3gpp-Sbi-Interplmn-Purpose header.

The 3gpp-Sbi-Interplmn-Purpose header may also include detailed information required to perform the signal forwarding using N32, such as information (slice) of a network slice for inter-PLMN signaling intended by the NF service consumer, and other additional information (additional_info). The additional_info is, for example, a token.

The c-SEPP or p-SEPP determines whether the usage purpose (hereinafter, referred to as a "requested purpose") of N32 written in the 3gpp-Sbi-Interplmn-Purpose header matches any of the usage purposes of N32 for which connection with a counterpart operator is allowed in the initial handshake (such usage purposes are referred to as "allowed purposes" below). Note that the determination processing performed by the c-SEPP or p-SEPP is indicated by "•" in FIG. 8.

For example, the c-SEPP or p-SEPP may determine whether all three pieces of information on the usage purpose of N32, which are the N32Purpose, slice, and additional_info, are allowed. In this case, the c-SEPP or p-SEPP may reject the signal forwarding request when any one of the three pieces of information is not allowed.

The c-SEPP or p-SEPP performs the signal forwarding when the requested purpose matches any of the allowed purposes (Step 6 and Step 13 in FIG. 8).

In contrast, when the requested purpose does not match any of the allowed purposes, the c-SEPP or p-SEPP does not perform the signal forwarding, and returns to the NF service consumer an error response including information indicating that the signal forwarding is not possible.

As described above, in the present embodiment, the NF service consumer configures the 3gpp-Sbi-Interplmn-Purpose header (custom header) to at least one of the Nnrf_NF Discovery request and HTTP/2 Service request, and writes the requested purpose therein. Then, the c-SEPP or p-SEPP determines whether the requested purpose matches any of the allowed purposes.

As described above, according to the present embodiment, a parameter for confirming the usage purpose of N32 is added to the control signal(s) from the NF service consumer. This allows the SEPPs to appropriately determine the connection availability of N32 even when the usage purpose of N32 is extended so that N32 can be used for a purpose other than roaming.

Further, the NF service consumer receives the error response including the information indicating that the signal forwarding is not possible, and can thereby grasp the reason of the error that cannot be determined from only an HTTP response code.

### <Configuration of SEPP>

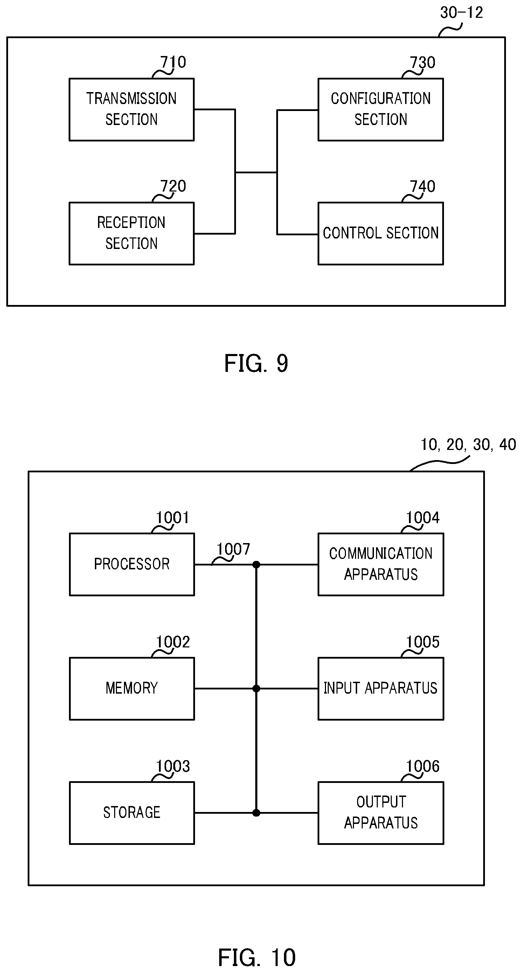

FIG. 9 illustrates an exemplary function configuration of SEPP 30-12 according to an embodiment of the present disclosure. As illustrated in FIG. 9, SEPP 30-12 includes transmission section 710, reception section 720, configuration section 730, and control section 740. The function configuration illustrated in FIG. 9 is merely an example. Any names may be used for the function categories and function sections as long as they are capable of performing an operation according to the present embodiment.

Transmission section 710 includes a function of generating a signal to be transmitted and transmitting the generated signal to a network. Reception section 720 includes a function of receiving various signals and acquiring, for example, information of a higher layer from the received signal.

Configuration section 730 stores preconfigured configuration information that is configured in advance and configuration information in a storage device (storage), and reads the preconfigured configuration information and configuration information from the storage device as necessary. Note that configuration section 730 may be included in control section 740.

Control section 740 controls the entire SEPP 30-12. A functional part for signal transmission in control section 740 may be included in transmission section 710, and a functional part for signal reception in control section 740 may be included in reception section 720.

### (Summary of Embodiment)

As described above, an embodiment of the present disclosure facilitates providing a network node that connects to another network node via a reference point, the network node including: a reception section that receives a first control signal including information indicating a usage purpose of the reference point requested by the another network node; a control section that determines, for each of a plurality of the usage purposes, whether the requested usage purpose is allowed; and a transmission section that transmits, to the another network node, a second control signal including information portions respectively indicating an allowed usage purpose and a rejected usage purpose among a plurality of the requested usage purposes, wherein, the first control signal includes a plurality of information portions on the usage purpose of the reference point, and the control section determines whether all of the plurality of information portions on the usage purpose of the reference point are allowed in an agreement between operators.

The above configuration allows the network node to appropriately determine the connection availability of the reference point even when the usage purpose of the reference point is extended.

In the network node, the second control signal includes a first attribute indicating the allowed usage purpose and a second attribute indicating the rejected usage purpose. The above configuration allows the another network node to recognize both the allowed usage purpose and the rejected usage purpose.

In the network node, the network node is a security edge protection proxy (SEPP) in a public land mobile network (PLMN) either on a side of a home public land mobile network (HPLMN) or on a terminating side, the another network node is an SEPP in a PLMN either on a side of a visited public land mobile network (VPLMN) or on an originating side, and the reference point is N32.

The above configuration allows the network node to appropriately determine the connection availability of N32 even when the usage purpose of N32 is extended so that N32 can be used for a purpose other than roaming.

An embodiment of the present disclosure facilitates providing a network node that connects to another network node via a reference point, the network node including: a transmission section that transmits, to the another network node, a first control signal including information indicating a usage purpose of the reference point to request; and a reception section that receives, from the another network node, a second control signal including information portions respectively indicating an allowed usage purpose and a rejected usage purpose among a plurality of the requested usage purposes.

The above configuration allows the network node to recognize both the allowed usage purpose and the rejected usage purpose even when the usage purpose of the reference point is extended.

An embodiment of the present disclosure facilitates providing a communication method between a first network node and a second network node via a reference point, the communication method including: transmitting, by the first network node to the second network node, a first control signal including information indicating a usage purpose of the reference point to request; determining, by the second network node, for each of a plurality of the usage purposes, whether the requested usage purpose is allowed; and transmitting, by the second network node to the first network node, a second control signal including information portions respectively indicating an allowed usage purpose and a rejected usage purpose among a plurality of the requested usage purposes, wherein, the first control signal includes a plurality of information portions on the usage purpose of the reference point, and the second network node determines whether all of the plurality of information portions on the usage purpose of the reference point are allowed in an agreement between operators.

The above configuration allows the network node to appropriately determine the connection availability of the reference point even when the usage purpose of the reference point is extended.

### (Hardware Configuration)

Note that, the block diagrams used to describe the above embodiment illustrate blocks on the basis of functions. These functional blocks (component sections) are implemented by any combination of at least hardware or software. A method for implementing the functional blocks is not particularly limited. That is, the functional blocks may be implemented using one physically or logically coupled apparatus. Two or more physically or logically separate apparatuses may be directly or indirectly connected (for example, via wires or wirelessly), and the plurality of apparatuses may be used to implement the functional blocks. The functional blocks may be implemented by combining software with the one apparatus or the plurality of apparatuses described above.

The functions include, but not limited to, judging, deciding, determining, computing, calculating, processing, deriving, investigating, searching, confirming, receiving, transmitting, outputting, accessing, solving, selecting, choosing, establishing, comparing, supposing, expecting, regarding, broadcasting, notifying, communicating, forwarding, configuring, reconfiguring, allocating, mapping, assigning, and the like. For example, a functional block (component section) that functions to achieve transmission is referred to as "transmission section," "transmitting unit," or "transmitter." The methods for implementing the functions are not limited specifically as described above.

For example, the base station, the terminal, and the like according to an embodiment of the present disclosure may function as a computer that executes processing of a wireless communication method of the present disclosure. FIG. 10 illustrates an exemplary hardware configuration of the terminal, the base station, the data hub access support, and other network nodes according to one embodiment of the present disclosure. Physically, terminal 10, base station 20, and other network nodes 30-1 to 30-12 and 40 as described above may be a computer apparatus including processor 1001, memory 1002, storage 1003, communication apparatus 1004, input apparatus 1005, output apparatus 1006, bus 1007, and the like.

Note that the term "apparatus" in the following description can be replaced with a circuit, a device, a unit, or the like. The hardware configurations of terminal 10, base station 20, and other network nodes 30-1 to 30-12 and 40 may include one apparatus or a plurality of apparatuses illustrated in the drawings or may not include part of the apparatuses.

The functions of terminal 10, base station 20, and other network nodes 30-1 to 30-12 and 40 are implemented by predetermined software (program) loaded into hardware, such as processor 1001, memory 1002, and the like, according to which processor 1001 performs the arithmetic and controls communication performed by communication apparatus 1004 or at least one of reading and writing of data in memory 1002 and storage 1003.

Processor 1001 operates an operating system to entirely control the computer, for example. Processor 1001 may be composed of a central processing unit (CPU) including an interface with peripheral apparatuses, control apparatus, arithmetic apparatus, register, and the like. For example, control section 740 and the like as described above may be implemented using processor 1001.

Processor 1001 reads a program (program code), a software module, data, and the like from at least one of storage 1003 and communication apparatus 1004 to memory 1002 and performs various types of processing according to the program (program code), the software module, the data, and the like. As the program, a program for causing the computer to perform at least a part of the operation described in the above embodiments is used. For example, control section 740 may be implemented using a control program stored in memory 1002 and operated by processor 1001, and the other functional blocks may also be implemented in the same way. While it has been described that the various types of processing as described above are performed by one processor 1001, the various types of processing may be performed by two or more processors 1001 at the same time or in succession. Processor 1001 may be implemented using one or more chips. Note that the program may be transmitted from a network through a telecommunication line.

Memory 1002 is a computer-readable recording medium and may be composed of, for example, at least one of a Read Only Memory (ROM), an Erasable Programmable ROM (EPROM), an Electrically Erasable Programmable ROM (EEPROM), and a Random Access Memory (RAM). Memory 1002 may be called as a register, a cache, a main memory (main storage apparatus), or the like. Memory 1002 can save a program (program code), a software module, and the like that can be executed to carry out the radio communication method according to an embodiment of the present disclosure.

Storage 1003 is a computer-readable recording medium and may be composed of, for example, at least one of an optical disk such as a Compact Disc ROM (CD-ROM), a hard disk drive, a flexible disk, a magneto-optical disk (for example, a compact disc, a digital versatile disc, or a Blu-ray (registered trademark) disc), a smart card, a flash memory (for example, a card, a stick, or a key drive), a floppy (registered trademark) disk, and a magnetic strip. Storage 1003 may also be called as an auxiliary storage apparatus. The storage medium as described above may be, for example, a database, a server, or other appropriate media including at least one of memory 1002 and storage 1003.

Communication apparatus 1004 is hardware (transmission and reception device) for communication between computers through at least one of wired and wireless networks and is also called as, for example, a network device, a network controller, a network card, or a communication module. Communication apparatus 1004 may be configured to include a high frequency switch, a duplexer, a filter, a frequency synthesizer, and the like in order to achieve at least one of Frequency Division Duplex (FDD) and Time Division Duplex (TDD), for example. For example, transmission section 710, reception section 720, and the like as described above may be implemented using communication apparatus 1004.

Input apparatus 1005 is an input device (for example, a keyboard, a mouse, a microphone, a switch, a button, or a sensor) that receives input from the outside. Output apparatus 1006 is an output device (for example, a display, a speaker, or an LED lamp) that makes outputs to the outside. Note that input apparatus 1005 and output apparatus 1006 may be integrated (for example, a touch panel).

The apparatuses, such as processor 1001, memory 1002, and the like are connected by bus 1007 for communication of information. Bus 1007 may be configured using a single bus or using buses different between each pair of the apparatuses.

Furthermore, terminal 10, base station 20, and other network nodes 30-1 to 30-12 and 40 may include hardware, such as a microprocessor, a digital signal processor (DSP), an Application Specific Integrated Circuit (ASIC), a Programmable Logic Device (PLD), and a Field Programmable Gate Array (FPGA), and the hardware may implement part or all of the functional blocks. For example, processor 1001 may be implemented using at least one of these pieces of hardware.

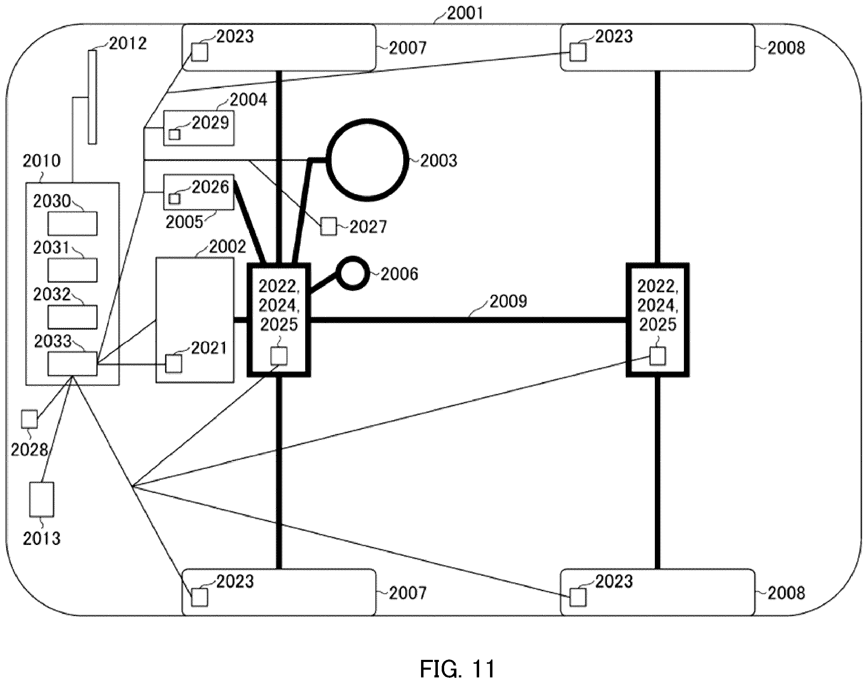

FIG. 11 illustrates an exemplary configuration of vehicle 2001. As illustrated in FIG. 11, vehicle 2001 includes, drive section 2002, steering section 2003, accelerator pedal 2004, brake pedal 2005, gear shift 2006, front wheels 2007, rear wheels 2008, axle 2009, electronic control section 2010, various sensors 2021 to 2029, information service section 2012, and communication module 2013. The aspects/embodiments described in the present disclosure may be applied to a communication apparatus mounted on vehicle 2001, and for example, may be applied to communication module 2013.

Drive section 2002 is composed of an engine or a motor, or has a hybrid configuration of an engine and a motor, for example. Steering section 2003 includes at least a steering wheel, and is configured to steer at least either front wheels or rear wheels based on an operation of the steering wheel operated by a user.

Electronic control section 2010 is composed of microprocessor 2031, memory (ROM and RAM) 2032, and communication port (IO port) 2033. Signals from various sensors 2021 to 2029 provided in vehicle 2001 are inputted to electronic control section 2010. Electronic control section 2010 may be referred to as an electronic control unit (ECU).

The signals from various sensors 2021 to 2029 include a current signal from current sensor 2021 for sensing the current of the motor, a rotation speed signal of the front and rear wheels acquired by rotation speed sensor 2022, a pneumatic signal of the front and rear wheels acquired by pneumatic sensor 2023, a vehicle speed signal acquired by vehicle speed sensor 2024, an acceleration signal acquired by acceleration sensor 2025, an accelerator pedal depression signal acquired by accelerator pedal sensor 2029, a brake pedal depression signal acquired by brake pedal sensor 2026, an operation signal of the gear shift acquired by gear shift sensor 2027, a detection signal for detecting an obstacle, a vehicle, a pedestrian, etc., acquired by object detection sensor 2028, and the like.

Information service section 2012 is composed of various devices for providing various types of information such as driving information, traffic information, entertainment information, etc., and one or more ECUs for controlling those devices. The various devices include a car navigation system, an audio system, a speaker, a TV, a radio, and the like. Information service section 2012 provides various types of multimedia information and multimedia services to a passenger of vehicle 2001 using information acquired from an external device via communication module 2013, for example.

Driving support system section 2030 is composed of various devices for providing functions for preventing an accident and reducing the driving load of a driver, and one or more ECUs for controlling those devices. Such devices include a millimeter-wave radar, light detection and ranging (LiDAR), a camera, a positioning locator (e.g., GNSS, etc.), map information (e.g., high definition (HD) map, autonomous vehicle (AV) map, etc.), a gyro system (e.g., inertial measurement unit (IMU), inertial navigation system (INS), etc.), an artificial intelligence (AI) chip, an AI processor, and the like. In addition, driving support system section 2030 transmits and receives various types of information via communication module 2013, and realizes a driving support function or an automatic driving function.

Communication module 2013 can communicate with microprocessor 2031 and the components of vehicle 2001 via a communication port. For example, communication module 2013 transmits and receives data, via communication port 2033, to and from drive section 2002, steering section 2003, accelerator pedal 2004, brake pedal 2005, gear shift 2006, front wheels 2007, rear wheels 2008, axle 2009, microprocessor 2031 and memory (ROM and RAM) 2032 in electronic control section 2010, and various sensors 2021 to 2029, which are all provided in vehicle 2001.

Communication module 2013 is a communication device controllable by microprocessor 2031 of electronic control section 2010 and capable of communicating with an external device. For example, communication module 2013 transmits and receives various types of information to and from the external device via radio communication. Communication module 2013 may be provided either inside or outside of electronic control section 2010. The external device may be, for example, a base station, a mobile station, or the like.

Communication module 2013 transmits a current signal inputted to electronic control section 2010 from the current sensor to the external device via radio communication. Further, communication module 2013 transmits signals inputted to electronic control section 2010 to the external device via radio communication. The signals includes a rotation speed signal of the front and rear wheels acquired by rotation speed sensor 2022, a pneumatic signal of the front and rear wheels acquired by pneumatic sensor 2023, a vehicle speed signal acquired by vehicle speed sensor 2024, an acceleration signal acquired by acceleration sensor 2025, an accelerator pedal depression signal acquired by accelerator pedal sensor 2029, a brake pedal depression signal acquired by brake pedal sensor 2026, an operation signal of the gear shift acquired by gear shift sensor 2027, a detection signal for detecting an obstacle, a vehicle, a pedestrian, etc., acquired by object detection sensor 2028, and the like.

Communication module 2013 receives various types of information (traffic information, signal information, inter-vehicle information, etc.) transmitted from the external device, and displays the information on information service section 2012 provided in vehicle 2001. In addition, communication module 2013 stores various types of information received from the external device in available memory 2032 by microprocessor 2031. Microprocessor 2031 may control, based on the information stored in memory 2032, drive section 2002, steering section 2003, accelerator pedal 2004, brake pedal 2005, gear shift 2006, front wheels 2007, rear wheels 2008, axle 2009, various sensors 2021 to 2029, etc., which all provided in vehicle 2001.

### (Notification of Information and Signaling)

The notification of information is not limited to the aspects/embodiments described in the present disclosure, and the information may be notified by another method. For example, the notification of information may be performed out by one or a combination of physical layer signaling (for example, Downlink Control Information (DCI) and Uplink Control Information (UCI)), upper layer signaling (for example, Radio Resource Control (RRC) signaling, Medium Access Control (MAC) signaling, notification information (Master Information Block (MIB), and System Information Block (SIB))), and other signals. The RRC signaling may be called an RRC message and may be, for example, an RRC connection setup message, an RRC connection reconfiguration message, or the like.

### (Application System)

The aspects/embodiments described in the present specification may be applied to at least one of systems using Long Term Evolution (LTE), LTE-Advanced (LTE-A), SUPER 3G, IMT-Advanced, the 4th generation mobile communication system (4G), the 5th generation mobile communication system (5G), Future Radio Access (FRA), New Radio (NR), W-CDMA (registered trademark), GSM (registered trademark), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), or other appropriate systems and a next-generation system extended based on the above systems. Additionally or alternatively, a combination of two or more of the systems (e.g., a combination of at least LTE or LTE-A and 5G) may be applied.

### (Processing Procedure and the like)

The orders of the processing procedures, the sequences, the flow charts, and the like of the aspects and embodiments described in the present disclosure may be changed as long as there is no contradiction. For example, elements of various steps are presented in exemplary orders in the methods described in the present disclosure, and the methods are not limited to the presented specific orders.

### (Operation of Base Station)

Specific operations which are described in the present disclosure as being performed by the base station may sometimes be performed by an upper node depending on the situation. Various operations performed for communication with a user terminal in a network constituted by one network node or a plurality of network nodes including a base station can be obviously performed by at least one of the base station and a network node other than the base station (examples include, but not limited to, MME or S-GW). Although there is one network node in addition to the base station in the case illustrated above, a plurality of other network nodes may be combined (for example, MME and S-GW).

### (Direction of Input and Output)

The information and the like (see "Information and Signals") can be output from a higher layer (or a lower layer) to a lower layer (or a higher layer). The information, the signals, and the like may be input and output through a plurality of network nodes.

### (Handling of Input and Output Information and the like)

The input and output information and the like may be saved in a specific place (for example, memory) or may be managed using a management table. The input and output information and the like can be overwritten, updated, or additionally written. The output information and the like may be deleted. The input information and the like may be transmitted to another apparatus.

### (Determination Method)

The determination may be made based on a value expressed by one bit (0 or 1), based on a Boolean value (true or false), or based on comparison with a numerical value (for example, comparison with a predetermined value).

### (Software)

Regardless of whether the software is called as software, firmware, middleware, a microcode, or a hardware description language or by another name, the software should be broadly interpreted to mean an instruction, an instruction set, a code, a code segment, a program code, a program, a subprogram, a software module, an application, a software application, a software package, a routine, a subroutine, an object, an executable file, an execution thread, a procedure, a function, and the like.

The software, the instruction, the information, and the like may be transmitted and received through a transmission medium. For example, when the software is transmitted from a website, a server, or another remote source by using at least one of a wired technique (e.g., a coaxial cable, an optical fiber cable, a twisted pair, and a digital subscriber line (DSL)) and a radio technique (e.g., an infrared ray and a microwave), the at least one of the wired technique and the radio technique is included in the definition of the transmission medium.

### (Information and Signals)

The information, the signals, and the like described in the present disclosure may be expressed by using any of various different techniques. For example, data, instructions, commands, information, signals, bits, symbols, chips, and the like that may be mentioned throughout the entire description may be expressed by one or an arbitrary combination of voltage, current, electromagnetic waves, magnetic fields, magnetic particles, optical fields, and photons.

Note that the terms described in the present disclosure and the terms necessary to understand the present disclosure may be replaced with terms with the same or similar meaning. For example, at least one of the channel and the symbol may be a signal (signaling). The signal may be a message. The component carrier (CC) may be called a carrier frequency, a cell, a frequency carrier, or the like.

### ("System" and "Network")

The terms "system" and "network" used in the present disclosure can be interchangeably used.

### (Names of Parameters and Channels)

The information, the parameters, and the like described in the present disclosure may be expressed using absolute values, using values relative to predetermined values, or using other corresponding information. For example, radio resources may be indicated by indices.

The names used for the parameters are not limitative in any respect. Furthermore, the numerical formulas and the like using the parameters may be different from the ones explicitly disclosed in the present disclosure. Various channels (for example, PUCCH and PDCCH) and information elements, can be identified by any suitable names, and various names assigned to these various channels and information elements are not limitative in any respect.

### (Base Station (Radio Base Station))

The terms "Base Station (BS)", "radio base station", "fixed station", "NodeB", "eNodeB (eNB)", "gNodeB (gNB)", "access point", "transmission point", "reception point", "transmission/reception point", "cell", "sector", "cell group", "carrier", and "component carrier" may be used interchangeably in the present disclosure. The base station may be called a macro cell, a small cell, a femtocell, or a pico cell.

The base station can accommodate one cell or a plurality of (for example, three) cells. When the base station accommodates a plurality of cells, the entire coverage area of the base station can be divided into a plurality of smaller areas, and each of the smaller areas can provide a communication service based on a base station subsystem (for example, small base station for indoor remote radio head (RRH)). The term "cell" or "sector" denotes part or all of the coverage area of at least one of the base station and the base station subsystem that perform the communication service in the coverage.

### (Terminal)

The terms "Mobile Station (MS)", "user terminal", "User Equipment (UE)", and "terminal" may be used interchangeably in the present disclosure.

The mobile station may be called, by those skilled in the art, a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or by some other appropriate terms.

### (Base Station/Mobile Station)

At least one of the base station and the mobile station may be called a transmission apparatus, a reception apparatus, a communication apparatus, or the like. Note that, at least one of the base station and the mobile station may be a device mounted in a mobile entity, the mobile entity itself, or the like. The mobile entity may be a vehicle (e.g., an automobile or an airplane), an unmanned mobile entity (e.g., a drone or an autonomous vehicle), or a robot (a manned-type or unmanned-type robot). Note that, at least one of the base station and the mobile station also includes an apparatus that does not necessarily move during communication operation. For example, at least one of the base station and the mobile station may be Internet-of-Things (IoT) equipment such as a sensor.

The base station in the present disclosure may also be replaced with the user terminal. For example, the aspects/embodiments of the present disclosure may find application in a configuration that results from replacing communication between the base station and the user terminal with communication between multiple user terminals (such communication may, for example, be referred to as device-to-device (D2D), vehicle-to-everything (V2X), or the like). In this case, terminal 10 may be configured to have the functions that base station 20 described above has. The wordings "uplink" and "downlink" may be replaced with a corresponding wording for inter-equipment communication (for example, "side"). For example, an uplink channel, a downlink channel, and the like may be replaced with a side channel.

Similarly, the terminal in the present disclosure may be replaced with the base station. In this case, base station 20 is configured to have the functions that terminal 10 described above has.

### (Meaning and Interpretation of Terms)

As used herein, the term "determining" may encompass a wide variety of actions. For example, "determining" may be regarded as judging, calculating, computing, processing, deriving, investigating, looking up, searching (or, search or inquiry) (e.g., looking up in a table, a database or another data structure), ascertaining and the like. Furthermore, "determining" may be regarded as receiving (for example, receiving information), transmitting (for example, transmitting information), inputting, outputting, accessing (for example, accessing data in a memory) and the like. Also, "determining" may be regarded as resolving, selecting, choosing, establishing, comparing and the like. That is, "determining" may be regarded as a certain type of action related to determining. Also, "determining" may be replaced with "assuming", "expecting", "considering", and the like.

The terms "connected" and "coupled" as well as any modifications of the terms mean any direct or indirect connection and coupling between two or more elements, and the terms can include cases in which one or more intermediate elements exist between two "connected" or "coupled" elements. The coupling or the connection between elements may be physical or logical coupling or connection or may be a combination of physical and logical coupling or connection. For example, "connected" may be replaced with "accessed." When the terms are used in the present disclosure, two elements can be considered to be "connected" or "coupled" to each other using at least one of one or more electrical wires, cables, and printed electrical connections or using electromagnetic energy with a wavelength of a radio frequency domain, a microwave domain, an optical (both visible and invisible) domain, or the like that are non-limiting and non-inclusive examples.

### (Reference Signal)

The reference signal can also be abbreviated as an RS and may also be called as a pilot depending on the applied standard.

### (Meaning of "Based on")

The description "based on" used in the present disclosure does not mean "based only on", unless otherwise specified. In other words, the description "based on" means both of "based only on" and "based at least on".

### ("First" and "Second")

Any reference to elements by using the terms "first", "second", and the like used in the present disclosure does not generally limit the quantities of or the order of these elements. The terms can be used as a convenient method of distinguishing between two or more elements in the present disclosure. Therefore, reference to first and second elements does not mean that only two elements can be employed, or that the first element has to precede the second element somehow.

### (Means)

The "section" in the configuration of each apparatus may be replaced with "means", "circuit", "device", or the like.

### (Open Form)

In a case where terms "include", "including", and their modifications are used in the present disclosure, these terms are intended to be inclusive like the term "comprising". Further, the term "or" used in the present disclosure is not intended to be an exclusive "or".

### (Time Unit such as TTI, Frequency Unit such as RB, and Radio Frame Configuration)

The radio frame may be constituted by one frame or a plurality of frames in the time domain. The one frame or each of the plurality of frames may be called a subframe in the time domain. The subframe may be further constituted by one slot or a plurality of slots in the time domain. The subframe may have a fixed time length (e.g., 1 ms) independent of numerology.

The numerology may be a communication parameter that is applied to at least one of transmission and reception of a certain signal or channel. The numerology, for example, indicates at least one of SubCarrier Spacing (SCS), a bandwidth, a symbol length, a cyclic prefix length, Transmission Time Interval (TTI), the number of symbols per TTI, a radio frame configuration, specific filtering processing that is performed by a transmission and reception apparatus in the frequency domain, specific windowing processing that is performed by the transmission and reception apparatus in the time domain, and the like.

The slot may be constituted by one symbol or a plurality of symbols (e.g., Orthogonal Frequency Division Multiplexing (OFDM)) symbol, Single Carrier-Frequency Division Multiple Access (SC-FDMA) symbol, or the like) in the time domain. The slot may also be a time unit based on the numerology.

The slot may include a plurality of mini-slots. Each of the mini-slots may be constituted by one or more symbols in the time domain. Furthermore, the mini-slot may be referred to as a subslot. The mini-slot may be constituted by a smaller number of symbols than the slot. A PDSCH (or a PUSCH) that is transmitted in the time unit that is greater than the mini-slot may be referred to as a PDSCH (or a PUSCH) mapping type A. The PDSCH (or the PUSCH) that is transmitted using the mini-slot may be referred to as a PDSCH (or PUSCH) mapping type B.

The radio frame, the subframe, the slot, the mini slot, and the symbol indicate time units in transmitting signals. The radio frame, the subframe, the slot, the mini slot, and the symbol may be called by other corresponding names.

For example, one subframe, a plurality of continuous subframes, one slot, or one mini-slot may be called a Transmission Time Interval (TTI). That is, at least one of the subframe and the TTI may be a subframe (1 ms) in the existing LTE, a duration (for example, 1 to 13 symbols) that is shorter than 1 ms, or a duration that is longer than 1 ms. Note that, a unit that represents the TTI may be referred to as a slot, a mini-slot, or the like instead of a subframe.

Here, the TTI, for example, refers to a minimum time unit for scheduling in radio communication. For example, in an LTE system, the base station performs scheduling for allocating a radio resource (a frequency bandwidth, a transmit power, and the like that are used in each user terminal) on the basis of TTI to each user terminal. Note that, the definition of TTI is not limited to this.

The TTI may be a time unit for transmitting a channel-coded data packet (a transport block), a code block, or a codeword, or may be a unit for processing such as scheduling and link adaptation. Note that, when the TTI is assigned, a time section (for example, the number of symbols) to which the transport block, the code block, the codeword, or the like is actually mapped may be shorter than the TTI.

Note that, in a case where one slot or one mini-slot is referred to as the TTI, one or more TTIs (that is, one or more slots, or one or more mini-slots) may be a minimum time unit for the scheduling. Furthermore, the number of slots (the number of mini-slots) that make up the minimum time unit for the scheduling may be controlled.

A TTI that has a time length of 1 ms may be referred to as a usual TTI (a TTI in LTE Rel. 8 to LTE Rel. 12), a normal TTI, a long TTI, a usual subframe, a normal subframe, a long subframe, a slot, or the like. A TTI that is shorter than the usual TTI may be referred to as a shortened TTI, a short TTI, a partial TTI (or a fractional TTI), a shortened subframe, a short subframe, a mini-slot, a subslot, a slot, or the like.

Note that the long TTI (for example, the usual TTI, the subframe, or the like) may be replaced with the TTI that has a time length which exceeds 1 ms, and the short TTI (for example, the shortened TTI or the like) may be replaced with a TTI that has a TTI length which is less than a TTI length of the long TTI and is equal to or longer than 1 ms.

A resource block (RB) is a resource allocation unit in the time domain and the frequency domain, and may include one or more contiguous subcarriers in the frequency domain. The number of subcarriers that are included in the RB may be identical regardless of the numerology, and may be 12, for example. The number of subcarriers that are included in the RB may be determined based on the numerology.

In addition, the RB may include one symbol or a plurality of symbols in the time domain, and may have a length of one slot, one mini slot, one subframe, or one TTI. One TTI and one subframe may be constituted by one resource block or a plurality of resource blocks.

Note that one or more RBs may be referred to as a Physical Resource Block (PRB), a Sub-Carrier Group (SCG), a Resource Element Group (REG), a PRB pair, an RB pair, or the like.

In addition, the resource block may be constituted by one or more Resource Elements (REs). For example, one RE may be a radio resource region that is one subcarrier and one symbol.

A bandwidth part (BWP) (which may be referred to as a partial bandwidth or the like) may represent a subset of contiguous common resource blocks (RB) for certain numerology in a certain carrier. Here, the common RBs may be identified by RB indices that use a common reference point of the carrier as a reference. The PRB may be defined by a certain BWP and may be numbered within the BWP.

The BWP may include a UL BWP and a DL BWP. An UE may be configured with one or more BWPs within one carrier.

At least one of the configured BWPs may be active, and the UE does not have to assume transmission/reception of a predetermined signal or channel outside the active BWP. Note that, "cell", "carrier", and the like in the present disclosure may be replaced with "BWP".

Structures of the radio frame, the subframe, the slot, the mini-slot, the symbol, and the like are described merely as examples. For example, the configuration such as the number of subframes that are included in the radio frame, the number of slots per subframe or radio frame, the number of mini-slots that are included within the slot, the numbers of symbols and RBs that are included in the slot or the mini-slot, the number of subcarriers that are included in the RB, the number of symbols within the TTI, the symbol length, the Cyclic Prefix (CP) length, and the like can be changed in various ways.

In a case where articles, such as "a", "an", and "the" in English, for example, are added in the present disclosure by translation, nouns following these articles may have the same meaning as used in the plural.

In the present disclosure, the expression "A and B are different" may mean that "A and B are different from each other". Note that, the expression may also mean that "A and B are different from C". The expressions "separated" and "coupled" may also be interpreted in the same manner as the expression "A and B are different".

### (Variations and the like of Aspects)

The aspects and embodiments described in the present disclosure may be independently used, may be used in combination, or may be switched and used along the execution. Furthermore, notification of predetermined information (for example, notification indicating "it is X") is not limited to explicit notification, and may be performed implicitly (for example, by not notifying the predetermined information).

While the present disclosure has been described in detail, it is obvious to those skilled in the art that the present disclosure is not limited to the embodiments described in the present disclosure. Modifications and variations of the aspects of the present disclosure can be made without departing from the spirit and the scope of the present disclosure defined by the description of the appended claims. Therefore, the description of the present disclosure is intended for exemplary description and does not limit the present disclosure in any sense.

### Industrial Applicability

An embodiment of the present disclosure is useful for mobile communication systems.

### Reference Signs List

10 UE
20 (R)AN
30-12 SEPP
30-12v vSEPP
30-12h hSEPP
30-12i Initiating SEPP
30-12r Responding SEPP
710 Transmission section
720 Reception section
730 Configuration section
740 Control section

## Claims

1. A network node to be connected to another network node via an N32 interface,
wherein the network node is a Responding Security Edge Protection Proxy, SEPP (30-12r), and
the other network node is an Initiating SEPP (30-12i),
the network node comprising:
a reception section (720) configured to receive a request including data including a first attribute indicating a list of usage purposes of N32 connection from the other network node,
a control section (740) configured to determine whether each of the usage purposes included in the request is allowed, and
a transmission section (710) configured to transmit a response indicating allowance to the other network node, the response including data including a second attribute indicating a list of allowed usage purposes and a third attribute indicating a list of rejected usage purposes, among the usage purposes included in the request.

2. The network node according to claim 1,
wherein the usage purposes of the N32 connection includes Roaming, SMS_interconnect, Inter PLMN mobility, Roaming test, and SMS_interconnect test.

3. The network node according to claim 1,
wherein the first attribute and the second attribute include a "usagePurpose" that provides one or more values for the usage purposes of the N32 connection and an "additionalInfo" that provides additional information necessary for establishing the N32 connection, and the third attribute includes the "usagePurpose," the "additionalInfo," and a "cause" that provides the reason for rejection if any of the requested usage purposes is rejected.

4. A network node to be connected to another network node via an N32 interface,
wherein the network node is an Initiating Security Edge Protection Proxy, SEPP (30-12i), and
the other network node is a Responding SEPP (30-12r),
the network node comprising:
a transmission section (710) configured to transmit, to the other network node, a request including data including a first attribute indicating a list of usage purposes of N32 connection; and
a reception section (720) configured to receive a response indicating allowance from the other network node, the response including data including a second attribute indicating a list of allowed usage purposes and a third attribute indicating a list of rejected usage purposes, among the usage purposes included in the request.

5. A communication method between a first network node and a second network node via an N32 interface, wherein
the first network node is an Initiating Security Edge Protection Proxy, SEPP (30-12i), and
the second network node is a Responding SEPP (30-12r),
the communication method comprising:
transmitting, by the first network node, to the second network node, a request including data including a first attribute indicating a list of usage purposes of N32 connection,
determining, by the second network node, whether each of the usage purposes included in the request is allowed, and
transmitting, by the second network node, a response indicating allowance to the first network node, the response including data including a second attribute indicating a list of allowed usage purposes and a third attribute indicating a list of rejected usage purposes, among the usage purposes included in the request.

## Patentansprüche

1. Netzwerkknoten, der über eine N32-Schnittstelle mit einem anderen Netzwerkknoten zu verbinden ist,
wobei der Netzwerkknoten ein Responding-Security-Edge-Protection-Proxy, SEPP (30-12r), ist, und
der andere Netzwerkknoten ein Initiating-SEPP (30-12i) ist,
wobei der Netzwerkknoten Folgendes umfasst:
eine Empfangssektion (720), die ausgebildet ist, um eine Anfrage zu empfangen, die Daten einschließt, die ein erstes Attribut einschließen, das eine Liste von Nutzungszwecken der N32-Verbindung von dem anderen Netzwerkknoten angibt,
eine Steuersektion (740), die ausgebildet ist, um zu bestimmen, ob jeder der in der Anfrage eingeschlossenen Nutzungszwecke erlaubt ist, und
eine Übertragungssektion (710), die ausgebildet ist, um eine Antwort zu übertragen, die eine Erlaubnis an den anderen Netzwerkknoten anzeigt, wobei die Antwort Daten einschließt, die ein zweites Attribut, das eine Liste von zugelassenen Nutzungszwecken angibt, und ein drittes Attribut einschließen, das eine Liste von abgelehnten Nutzungszwecken angibt, unter den in der Anfrage eingeschlossenen Nutzungszwecken.

2. Netzwerkknoten nach Anspruch 1,
wobei die Nutzungszwecke der N32-Verbindung Roaming, SMS_interconnect, Inter-PLMN-Mobilität, Roaming-Test und SMS_interconnect-Test einschließen.

3. Netzwerkknoten nach Anspruch 1,
wobei das erste Attribut und das zweite Attribut ein "usagePurpose" einschließen, das einen oder mehrere Werte für die Nutzungszwecke der N32-Verbindung bereitstellt, sowie ein "additionalInfo", das zusätzliche Informationen bereitstellt, die zum Etablieren der N32-Verbindung notwendig sind, und das dritte Attribut das "usagePurpose", das "additionalInfo" und ein "cause", das den Grund für die Ablehnung bereitstellt, falls einer der angefragten Nutzungszwecke abgelehnt wird, einschließt.

4. Netzwerkknoten, der über eine N32-Schnittstelle mit einem anderen Netzwerkknoten zu verbinden ist,
wobei der Netzwerkknoten ein Initiating-Security-Edge-Protection-Proxy, SEPP (30-12i), ist, und
der andere Netzwerkknoten ein Responding-SEPP (30-12r) ist,
wobei der Netzwerkknoten Folgendes umfasst:
eine Übertragungssektion (710), die ausgebildet ist, um an den anderen Netzwerkknoten eine Anfrage zu übertragen, die Daten einschließt, die ein erstes Attribut einschließen, das eine Liste von Nutzungszwecken der N32-Verbindung angibt; und
eine Empfangssektion (720), die ausgebildet ist, um eine Antwort zu empfangen, die eine Erlaubnis von dem anderen Netzwerkknoten angibt, wobei die Antwort Daten einschließt, die ein zweites Attribut, das eine Liste von zugelassenen Nutzungszwecken angibt, und ein drittes Attribut einschließen, das eine Liste von abgelehnten Nutzungszwecken angibt, unter den in der Anfrage eingeschlossenen Nutzungszwecken.

5. Kommunikationsverfahren zwischen einem ersten Netzwerkknoten und einem zweiten Netzwerkknoten über eine N32-Schnittstelle, wobei
der erste Netzwerkknoten ein Initiating-Security-Edge-Protection-Proxy, SEPP (30-12i), ist, und
der zweite Netzwerkknoten ein Responding-SEPP (30-12r) ist,
wobei das Kommunikationsverfahren Folgendes umfasst:
Übertragen an den zweiten Netzwerkknoten durch den ersten Netzwerkknoten einer Anfrage, die Daten einschließt, die ein erstes Attribut einschließen, das eine Liste von Nutzungszwecken der N32-Verbindung angibt,
Bestimmen durch den zweiten Netzwerkknoten, ob jeder der in der Anfrage eingeschlossenen Nutzungszwecke erlaubt ist, und
Übertragen durch den zweiten Netzwerkknoten einer Antwort, die eine Erlaubnis angibt, an den ersten Netzwerkknoten, wobei die Antwort Daten einschließt, die ein zweites Attribut, das eine Liste von zugelassenen Nutzungszwecken angibt, und ein drittes Attribut einschließen, das eine Liste von abgelehnten Nutzungszwecken angibt, unter den in der Anfrage eingeschlossenen Nutzungszwecken.

## Revendications

1. Nœud de réseau destiné à être connecté à un autre nœud de réseau via une interface N32,
dans lequel le nœud de réseau est un proxy de protection de bordure de sécurité, SEPP répondant (30- 12r), et
l'autre nœud de réseau est un SEPP initiateur (30-12i),
le nœud de réseau comprenant :
une section de réception (720) configurée pour recevoir une requête incluant des données incluant un premier attribut indiquant une liste des finalités d'utilisation de la connexion N32 provenant de l'autre nœud de réseau,
une section de commande (740) configurée pour déterminer si chacune des finalités d'utilisation incluses dans la requête est autorisée, et
une section de transmission (710) configurée pour transmettre une réponse indiquant l'autorisation à l'autre nœud de réseau, la réponse incluant des données incluant un deuxième attribut indiquant une liste des finalités d'utilisation autorisées et un troisième attribut indiquant une liste des finalités d'utilisation rejetées, parmi les finalités d'utilisation incluses dans la requête.

2. Nœud de réseau selon la revendication 1,
dans lequel les finalités d'utilisation de la connexion N32 incluent Roaming, SMS_interconnect, Inter PLMN mobility, Roaming test, et SMS_interconnect test.

3. Nœud de réseau selon la revendication 1,
dans lequel le premier attribut et le deuxième attribut incluent un « usagePurpose » qui fournit une ou plusieurs valeurs pour les finalités d'utilisation de la connexion N32 et un « additionalInfo » qui fournit des informations supplémentaires nécessaires pour l'établissement de la connexion N32, et le troisième attribut inclut le « usagePurpose », le « additionalInfo », et une « cause » qui fournit la raison du rejet si l'une quelconque des finalités d'utilisation demandées est rejetée.

4. Nœud de réseau destiné à être connecté à un autre nœud de réseau via une interface N32,
dans lequel le nœud de réseau est un proxy de protection de bordure de sécurité, SEPP initiateur (30- 12i), et
l'autre nœud de réseau est un SEPP répondant (30-12r),
le nœud de réseau comprenant :
une section de transmission (710) configurée pour transmettre, à l'autre nœud de réseau, une requête incluant des données incluant un premier attribut indiquant une liste des finalités d'utilisation de la connexion N32 ; et
une section de réception (720) configurée pour recevoir une réponse indiquant l'autorisation provenant de l'autre nœud de réseau, la réponse incluant des données incluant un deuxième attribut indiquant une liste des finalités d'utilisation autorisées et un troisième attribut indiquant une liste des finalités d'utilisation rejetées, parmi les finalités d'utilisation incluses dans la requête.

5. Procédé de communication entre un premier nœud de réseau et un deuxième nœud de réseau via une interface N32, dans lequel
le premier nœud de réseau est un proxy de protection de bordure de sécurité, SEPP initiateur (30-12i), et
le deuxième nœud de réseau est un SEPP répondant (30-12r),
le procédé de communication comprenant :
la transmission, par le premier nœud de réseau, au deuxième nœud de réseau, d'une requête incluant des données incluant un premier attribut indiquant une liste des finalités d'utilisation de la connexion N32,
la détermination, par le deuxième nœud de réseau, de savoir si chacune des finalités d'utilisation incluses dans la requête est autorisée, et
la transmission, par le deuxième nœud de réseau, d'une réponse indiquant l'autorisation au premier nœud de réseau, la réponse incluant des données incluant un deuxième attribut indiquant une liste des finalités d'utilisation autorisées et un troisième attribut indiquant une liste des finalités d'utilisation rejetées, parmi les finalités d'utilisation incluses dans la requête.
